# EUROPÄISCHE PATENTSCHRIFT

(11) **EP 1 196 891 B1**
(45) Veröffentlichungstag und Bekanntmachung des Hinweises auf die Patenterteilung: **10.09.2003**
(21) Anmeldenummer: 00926755.0
(22) Anmeldetag: 27.03.2000
(51) Int. Cl.: G06T 7/00

(54) **VORRICHTUNG ZUM BILDHAFTEN ERFASSEN DREIDIMENSIONALER OBJEKTE**
DEVICE FOR PICTORIALLY DEPICTING THREE-DIMENSIONAL OBJECTS
DISPOSITIF D'IMAGERIE POUR OBJETS TRIDIMENSIONNELS

(30) Priorität: 26.03.1999 DE 19913853
(43) Veröffentlichungstag der Anmeldung: 17.04.2002
(73) Patentinhaber: Scannova GmbH, 72250 Freudenstadt (DE)
(72) Erfinder: Setzer, Steffen, 70565 Stuttgart (DE); Weigel, Thilo, 70565 Stuttgart (DE); Wright, Dittmar, 70565 Stuttgart (DE)
(74) Vertreter: Hössle Kudlek & Partner
(86) Internationale Anmeldenummer: EP0002639
(87) Internationale Veröffentlichungsnummer: WO00058913

(56) Entgegenhaltungen:
- EP-A- 0 631 250
- WO-A-98/09253
- WO-A-98/17970
- US-A- 5 818 959

## Beschreibung

Die vorliegende Erfindung betrifft eine Vorrichtung zum bildhaften Erfassen dreidimensionaler Objekte.

Im Stand der Technik ist es bekannt, zum bildhaften Erfassen dreidimensionaler Objekte und der Erzeugung eines dreidimensionalen Bilddatensatzes mittels im allgemeinen mindestens zweier Kameras eine Abstandsmessung zu dem zu erfassenden Objekt durchzuführen und eine "Punktewolke", d.h. eine Vielzahl von Koordinatenpunkten mit zugeordneter Bildinformation, die die Oberfläche des zu erfassenden Objektes darstellen, zu erzeugen. In einem weiteren Schritt werden die ermittelten Punkte mittels eines aufwendigen Rechenverfahrens zu Flächen verknüpft, die die Oberfläche des Objektes topologisch beschreiben. Das Ergebnis ist ein 3D-Polygondatensatz des erfaßten Objekts.

Aus der Druckschrift WO 98/17970 A ist eine Vorrichtung zum bildhaften Erfassen dreidimensionaler Objekte mit einer Mehrzahl von Kameras bekannt, die in definierter räumlicher Anordnung um ein zu erfassendes Objekt verteilt vorgesehen sind. Außerdem weist die Vorrichtung eine Speicher- und Wiedergabeeinrichtung auf, wobei eine Aufnahme des zu erfassenden Objekts aus einer Mehrzahl von Aufnahmerichtungen die Mehrzahl von Kameras relativ zu dem Objekt durch Drehen des Objekts mittels einer Drehrichtung erfolgt.

Aus der US-PS 5 818 959 ist ein Verfahren zum Erstellen eines dreidimensionalen Bildes aus mindestens zweidimensionalen Bildern bekannt, bei dem ein dreidimensionales Objekt von mindestens zwei horizontal um das Objekt angeordneten Kameras aufgenommen wird. Während der Aufnahme wird das dreidimensionale Objekt mit einem Streifenmuster bestrahlt. Ein erstes der aufgenommenen zweidimensionalen Bilder wird als Referenzbild, ein weiteres Bild als sogenanntes zweites Bild ausgewählt. Auf der Grundlage dieser beiden aus leicht unterschiedlichen Standorten aufgenommenen Bildern wird nach dem sogenannten Binokularprinzip ein dreidimensionales Bild errechnet, wozu der Raum, in dem sich das Objekt befindet, in sogenannte Voxels unterteilt wird und die Werte eines jeden Voxels in jedem der beiden zweidimensionalen Bilder miteinander verglichen werden. Eine Identifizierung gleicher Voxels wird durch das eingestrahlte Streifenmuster erzielt. Zur Minimierung des Rechenaufwandes und Umgehung des sogenannten Hintergrundproblems werden zur Überprüfung von Oberflächenpunkten des Objekts weiter entfernt liegende Kameras benutzt.

Aus der US-PS 4 982 438 ist ein Verfahren zum Erkennen der dreidimensionalen Form eines Objektes bekannt, bei dem das aufzunehmende Objekt von vier insbesondere jeweils senkrecht zueinander angeordneten Kamerapaaren umgeben ist, die in einer horizontalen Ebene angeordnet sind. Die Kamerapaare nehmen jeweils ein binokulares Bild des Objekts auf. Auf der Grundlage dieser Bilder wird die dreidimensionale Form des Objekts berechnet, indem die binokulare Rechenmethode mit der sogenannten Kegel-Silhouettenmethode (Cone-Silhouetting Method) kombiniert wird.

Aus der EP 0 631 250 A2 ist ein weiteres Verfahren zur Nachbildung dreidimensionaler Objekte bekannt. Bei diesem Verfahren sind mehrere an unterschiedlichen Positionen aufgestellte Kameras vorgesehen, die beweglich angeordnet sind und/oder zur Aufnahme eines bewegten Objekts geeignet sind. Ähnlich wie bei den bereits beschriebenen Verfahren wird eine Kamera als Referenzkamera ausgewählt und es werden im Verhältnis zu dem von dieser Kamera aufgenommenen Bild in den von den anderen Kameras aufgenommenen Bildern übereinstimmende Punkte gesucht, die als Grundlage für die Berechnung der Voxel-Inhalte dienen.

Aus der US-PS 4 825 393, US-PS 5 432 712, US-PS 5 577 130, US-PS 5 561 526 und US-PS 4 654 872 sind jeweils Verfahren zum Ausmessen dreidimensionaler Gegenstände bzw. zur Abstandsmessung bekannt, die auf von der Binokularmethode ausgehenden komplexen Berechnungen beruhen.

Die Firma Kaidan, Feasterville, Pennsylvania, USA, bietet unter der Bezeichnung Meridian C-60 ein Fotografiergerüst an, das eine im wesentlichen C-förmige Schiene umfaßt, entlang deren Innenseite eine Kamera verfahrbar angeordnet ist. Das zu fotografierende Objekt wird auf einem Drehteller derart angeordnet, daß die entlang der Schiene verfahrbare Kamera in vertikaler Richtung um das Objekt verstellbar ist.

Aus "Illusion rundherum" von Beyer et al, c't, 1995, Heft 8, Seiten 104 bis 107, ist im Zusammenhang mit dem System "QuickTime VR" der Firma Apple ein System bekannt, bei dem zur Erzielung eines dreidimensionalen Eindrucks eines Objektes, das der Anwender per Maus flüssig in alle Richtungen drehen kann, Objekte mittels Einzelbilder rundherum mit 10° Abstand zueinander bei 360° horizontaler und 180° vertikaler Perspektive aufgenommen werden.

Bei den bekannten Systemen ist als nachteilig festzuhalten, das sie aufgrund der komplexen Berechnungsmethoden zur Erstellung der dreidimensionalen Polygondatensätze Datenverarbeitungsanlagen mit sehr großer Rechnerleistung benötigen. Ein weiterer Nachteil ist die sogenannte Hintergrundproblematik, da die zu erfassenden Objekte von den bekannten Systemen nicht zufriedenstellend vom Bildhintergrund unterschieden und abgegrenzt werden können.

Ausgehend hiervon liegt der Erfindung die Aufgabe zugrunde, eine Vorrichtung zum bildhaften Erfassen dreidimensionaler Objekte bereitzustellen, mit der auf einfache und kostengünstige Weise und insbesondere unter Verwendung von Datenverarbeitungsanlagen mit üblicher Rechnerleistung dreidimensionale Objekte erfaßt und für einen Betrachter in perspektivischer Ansicht zur Erzeugung eines dreidimensionalen Eindrucks wiedergegeben werden können. Insbesondere soll erfindungsgemäß ein zu erfassendes Objekt ohne komplizierte Berechnungsverfahren von einem Bildhintergrund abgegrenzt werden können.

Zur Lösung dieser Aufgabe wird eine Vorrichtung mit den Merkmalen des Anspruchs 1 vorgeschlagen.

Erfindungsgemäß werden somit von einem zu erfassenden Objekt mittels einer Mehrzahl von Kameras eine Vielzahl von Aufnahmen aus unterschiedlichen Aufnahmerichtungen erstellt und jede dieser Aufnahmen wird unter Zuordnung der zugehörigen Relativkoordinaten Kamera/Objekt abgespeichert. Im Gegensatz zum Stand der Technik findet somit eine Abspeicherung reiner zweidimensionaler Bilddaten statt, denen jeweils Informationen über die räumliche Beziehung zwischen Aufnahmeposition und aufgenommenen Objekt zugeordnet sind, anstatt aus einer Fülle aufgenommener zweidimensionaler Daten einen dreidimensionalen Objektdatensatz zu berechnen. Eine Wiedergabe der gespeicherten Bilddaten erfolgt mittels eines geeigneten Darstellungsprogramms, indem in Abhängigkeit von der relativen Position zum Objekt das entsprechende zweidimensionale Bild aufgerufen wird, das der jeweiligen Ansicht entspricht, d.h. die Wiedergabe der gespeicherten Bilddaten erfolgt in perspektivischer Ansicht zur Erzeugung eines dreidimensionalen Eindrucks durch aneinanderfügen der zweidimensionalen Bilddaten unter Berücksichtigung der zugehörigen Koordinaten. So entsteht der Eindruck, das Objekt würde in einer dreidimensionalen Darstellung betrachtet. Die erfindungsgemäße Vorrichtung erfordert im Gegensatz zu herkömmlichen 3D-Anwendungen erheblich weniger Rechnerleistung. Die mit den Bilddaten abgespeicherten Koordinaten bzw. Parameter können neben Raum- und Winkelkoordinaten auch Zeitkoordinaten umfassen, was insbesondere bei sich ändernden, bewegenden oder auch wachsenden Objekten (Pflanzen) eine "dynamische" Objekterfassung und entsprechende Wiedergabe ermöglicht.

Das zu erfassende Objekt wird gedreht und mittels räumlich definiert angeordneter Kameras aufgenommen. Jeder Einzelaufnahme des Objekts wird die zugehörige Winkelstellung entsprechend der Drehung des Objekts zugeordnet. Um eine perspektivische Ansicht des Objekts aus verschiedenen Höhen zu ermöglichen, sind die Kameras in unterschiedlichen Höhen im Raum angeordnet. Während einer vollständigen Drehung des zu erfassenden Objekts erfolgt eine vorbestimmte Anzahl von Aufnahmen. Beispielsweise wird alle 10° bei einer Drehung des Objekts eine Aufnahme gemacht, d.h. 36 Aufnahmen bei einer vollständigen Umdrehung.

In Ausgestaltung der Erfindung wird das zu erfassende Objekt mittels zwei oder mehr Kameras aufgenommen, deren relative Position in bezug auf das zu erfassende Objekt geändert wird. Bei der Änderung der relativen Position handelt es sich um eine Drehung des zu erfassenden Objekts. Unabhängig von der Art und Weise der relativen Änderung der Position zwischen Kameras und zu erfassendem Objekt ist es wichtig, daß zu jedem Zeitpunkt die relativen Koordinaten jeder Kamera zu dem erfassenden Objekt bekannt sind. Bei den relativen Koordinaten handelt es sich um geeignete Raum- und/oder Winkelkoordinaten.

In vorteilhafter Ausgestaltung der Erfindung ist eine Mehrzahl von Kameras räumlich um das zu erfassende Objekt verteilt angeordnet. Bei einer ausreichend großen Anzahl von Kameras, die das Objekt von einer ausreichend großen Anzahl von Aufnahmerichtungen aufnehmen können, um eine zufriedenstellende perspektivische Wiedergabe auf der Grundlage von zweidimensionalen Bilddatensätzen zu gewährleisten, ist keine relative Änderung der Positionen zwischen Kameras und zu erfassendem Objekt notwendig. Sollte die Zahl der Kameras jedoch nicht ausreichend groß sein, so findet eine Drehung des zu erfassenden Objektes statt. Die Kameras können beispielsweise auf einer das Objekt im wesentlichen symmetrisch umgebenden zylindrischen oder teil-sphärischen (domartige Anordnung) Fläche angeordnet sein.

In besonders vorteilhafter Ausgestaltung der Erfindung ist eine Mehrzahl von Kameras in einer durch das zu erfassende Objekt verlaufenden Ebene um das Objekt verteilt angeordnet. Vorzugsweise erfolgt die Anordnung der Kameras dabei entlang einer im wesentlichen C-förmigen oder teilkreisförmigen Schiene. Das zu erfassende Objekt ist beispielsweise etwa im Mittelpunkt der Krümmung der Schiene angeordnet. Zur Erzeugung einer relativen Positionsveränderung wird entweder das Objekt gedreht oder die Schiene mitsamt der daran angeordneten Kameras um das Objekt, beispielsweise entlang einer um das Objekt herumführenden Schiene, verschwenkt.

In weiterer Ausgestaltung der Erfindung weist die erfindungsgemäße Vorrichtung eine Hintergrundfläche mit im etwa im Mittelpunkt der Krümmung der Schiene angeordnet. Zur Erzeugung einer relativen Positionsveränderung wird entweder das Objekt gedreht oder die Schiene mitsamt der daran angeordneten Kameras um das Objekt, beispielsweise entlang einer um das Objekt herumführenden Schiene, verschwenkt.

In weiterer Ausgestaltung der Erfindung, für die auch selbständig Schutz begehrt wird, weist die erfindungsgemäße Vorrichtung gemäß Anspruch 16 eine Hintergrundfläche mit im wesentlichen konstantem Farbton im Farbraum auf. Mit einer derartigen Hintergrundfläche, die so ausgestaltet ist, daß sie in jedem von der mindestens einen Kamera aufgenommenen Bild den gesamten Bildhintergrund des aufgenommenen Objekts darstellt, ist eine einfache, klare und eindeutige Abgrenzung des Objekts zum Hintergrund gewährleistet.

In Ausgestaltung der Erfindung sind Beleuchtungsmittel zum Beleuchten der kamerafernen Rückseite der Hintergrundfläche vorgesehen. Die Beleuchtung der Hintergrundfläche kann jedoch auch in geeigneter Weise von seitlich oder vorn erfolgen.

In anderer Ausgestaltung der Erfindung ist die Hintergrundfläche selbst leuchtend ausgebildet und ist vorzugsweise als elektrolumineszierende Folie ausgebildet. Damit lassen sich besonders gute Abgrenzungsergebnisse erzielen.

Um die Abgrenzung von Objekt zu Hintergrund noch weiter zu verbessern, ist in weiterer Ausgestaltung der Erfindung ein die Hintergrundfläche bedeckender flächiger oder folienförmiger Filter vorgesehen.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung dargestellt und wird im folgenden unter Bezugnahme auf die Zeichnung näher erläutert.
- Figur 1: zeigt in perspektivischer schematischer Darstellung eine erste Ausführungsform einer erfindungsgemäßen Vorrichtung zum bildhaften Erfassen dreidimensionaler Objekte.
- Figur 2: zeigt die Vorrichtung der Figur 1 in Draufsicht.
- Figur 3: zeigt in schematischer perspektivischer Darstellung ein zweites Ausführungsbeispiel einer erfindungsgemäßen Vorrichtung mit einer Mehrzahl von entlang einer im wesentlichen teilkreisförmigen Schiene angeordneten Kameras und auf einem Drehteller angeordnetem zu erfassenden Objekt.
- Figur 4: zeigt die Vorrichtung der Figur 3 in einer anderen Ansicht.
- Figur 5: zeigt die Vorrichtung der Figur 3 mit aufgehängtem Objekt.

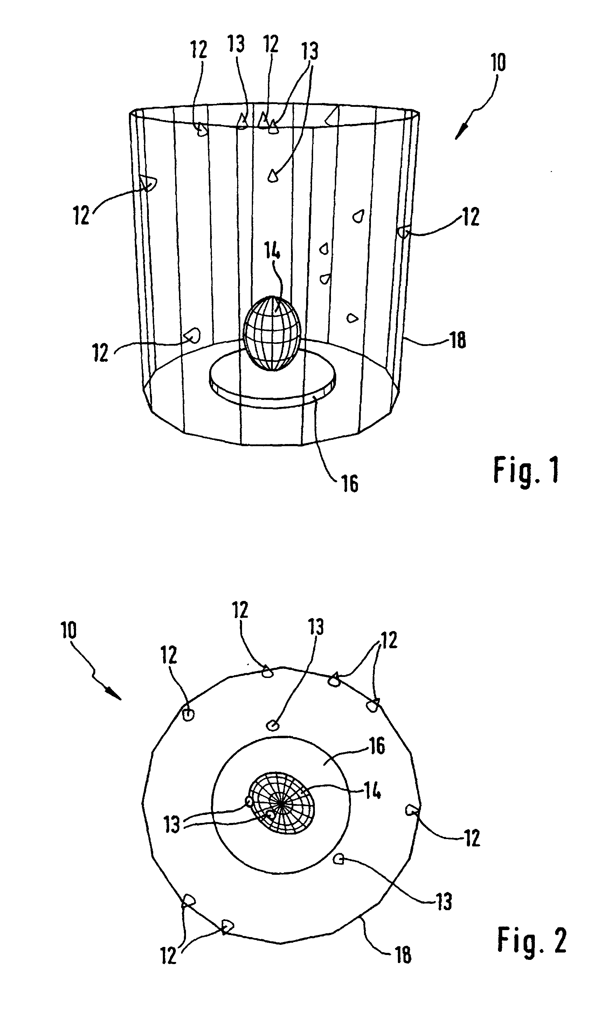

Die Figuren 1 und 2 zeigen zur Veranschaulichung des der Erfindung zugrundeliegenden Prinzips in stark schematischer Darstellung eine erste Ausführungsform einer erfindungsgemäßen Vorrichtung 10 zum bildhaften Erfassen dreidimensionaler Objekte. Figur 1 zeigt die Vorrichtung 10 in perspektivischer Darstellung, während in Figur 2 eine Draufsicht auf die Vorrichtung 10 der Figur 1 gezeigt ist.

Die erfindungsgemäße Vorrichtung 10 zum bildhaften Erfassen dreidimensionaler Objekte umfaßt eine Vielzahl von Kameras 12, 13, bei denen es sich vorteilhafterweise um sogenannte CCD-Kameras oder auch CMOS- oder HDRC-Kameras oder jede andere Art digitaler Fotokamera handelt. Die Kameras 12, 13 sind im Raum verteilt um einen Drehteller 16 angeordnet, auf dem ein zu erfassendes Objekt 14 plaziert ist. Um den Drehteller 16 ist beabstandet zu diesem eine Hintergrundfläche 18 derart angeordnet, daß sie den Drehteller 16 im wesentlichen axialsymmetrisch umgibt und dabei die Mantelfläche eines einem Zylinder angenäherten Polygons darstellt.

Die Kameras 12, 13 sind räumlich um das zu erfassende Objekt 14 verteilt angeordnet, wobei die Position jeder Kamera 12, 13 in bezug auf das zu erfassende Objekt 14 bekannt ist. Der Abstand jeder Kamera zu dem Objekt 14 und ihre jeweilige Position im Raum ist frei wählbar, d.h. es bestehen keine Auflagen dahingehend, daß die Kameras 12, 13 beispielsweise äquidistant zu dem Objekt 14 angeordnet sein müssen. In dem in den Figuren 1 und 2 dargestellten Ausführungsbeispiel sind erste Kameras 12 auf der durch die Hintergrundfläche 18 aufgespannten Polygonmantelfläche angeordnet und in die Hintergrundfläche 18 eingesetzt bzw. eingearbeitet. Somit weisen die Kameras 12 jeweils die gleiche Distanz zu der Rotationsachse der Mantelfläche und der im wesentlichen damit zusammenfallenden Drehachse des Drehtellers 16 auf.

Mit dem Bezugszeichen 13 versehene zweite Kameras sind im Inneren des durch die Hintergrundfläche 18 aufgespannten Volumens angeordnet, teilweise auch direkt oberhalb des Drehtellers 16.

Bei einer Aufnahme des Objekts 14 wird von jeder der Kameras 12, 13 mindestens ein Bild angefertigt, das gemeinsam mit den relativen Koordinaten der zugehörigen Kamera relativ zu dem Objekt 14 als zweidimensionaler Bilddatensatz in einer nicht näher dargestellten Speichereinrichtung abgespeichert. Die Koordinaten sind vorzugsweise Raum- und/oder Winkelkoordinaten, die eine Berechnung des Abstands zwischen der jeweiligen Kamera zu dem Objekt und den Winkel zwischen Kamera und Objekt (bezüglich der Horizontalen oder der Vertikalen oder einer anderen Referenzachse) gestattet.

Reicht die Anzahl der Kameras 12, 13, die im Raum um das Objekt 14 herum verteilt angeordnet sind, nicht aus, um eine zufriedenstellende perspektivische Ansicht des erfaßten Objekts zu erzeugen, beispielsweise weil ein wesentlicher Abschnitt des Objekts 14 nicht ausreichend fotografiert werden konnte, findet mittels einer geeigneten Dreheinrichtung (im dargestellten Beispiel der Drehteller 16) eine Drehung des Objekts 14 während der Aufnahme statt. Durch diese Drehung des Objekts 14, die ausreichend langsam erfolgt, können mit jeder der um das Objekt 14 herum angeordneten Kameras 12, 13 in vorbestimmten Winkelintervallen Bilder aufgenommen und abgespeichert werden, die unter Berücksichtigung der gemeinsam mit den Bildern abgespeicherten Koordinaten, in die auch die jeweilige Drehwinkelstellung des Objekts einfließt, eine Wiedergabe des erfaßten Objekts in perspektivischer Ansicht zur Erzeugung eines dreidimensionalen Eindrucks gestattet.

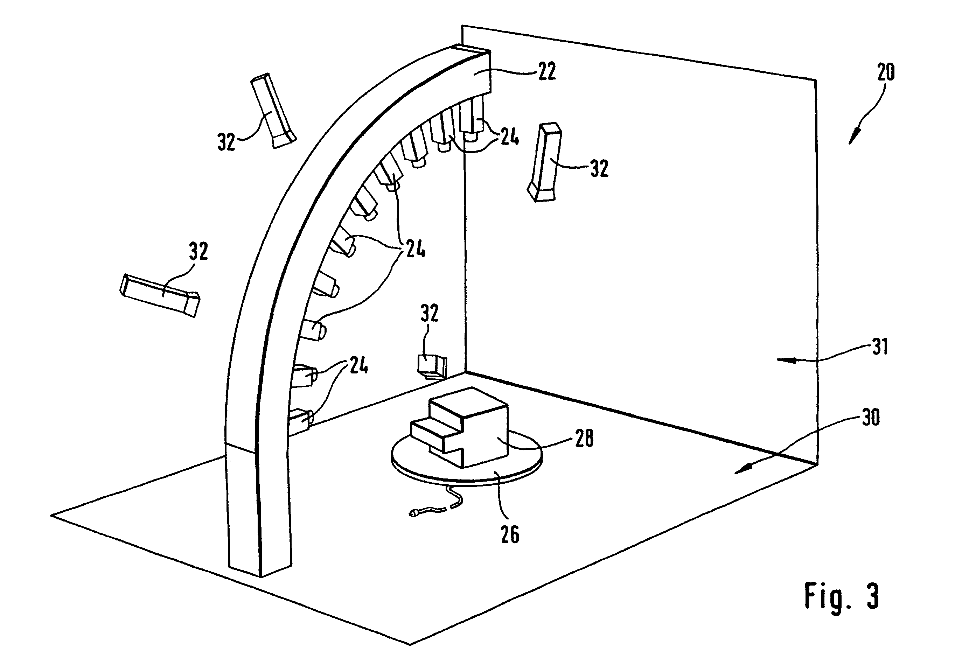

Figur 3 zeigt als bevorzugte Ausführungsform der Erfindung eine Vorrichtung 20 zum bildhaften Erfassen dreidimensionaler Objekte. Die Vorrichtung 20 umfaßt einen im wesentlichen teilkreisförmigen Kameraarm 22, in dem eine Mehrzahl von Kameras 24 angeordnet sind. Der Kameraarm 22 ist aufrechtstehend angeordnet, d.h. die Ebene, in der der Kameraarm 22 liegt, verläuft im wesentlichen senkrecht zur Horizontalen bzw. zur Bodenfläche. Im folgenden wird der Kameraarm 22 aus Gründen der Einfachheit als Schiene 22 bezeichnet.

Die Kameras 24 sind an der Schiene 22 derart angebracht, daß ihre optischen Achsen jeweils im wesentlichen in der Ebene der Schiene 22 verlaufen und im wesentlichen auf den Mittelpunkt des Teilkreises der Schiene 22 gerichtet sind. Mit anderen Worten sind die Kameras 24 entlang der Schiene 22 mit im wesentlichen radialem Strahlengang angeordnet.

Die Vorrichtung 20 umfaßt des weiteren als Dreheinrichtung einen Drehteller 26, auf dem ein zu erfassendes Objekt 28 angeordnet ist. Die Drehachse des Drehtellers 26 liegt dabei im wesentlichen in der Ebene der Schiene 22 und die Ebene, in der die optischen Achsen der Kameras 24 liegen, verläuft durch das Objekt 28.

Des weiteren umfaßt die Vorrichtung 20 eine erste Hintergrundfläche 30 und eine zweite Hintergrundfläche 31. Die erste Hintergrundfläche 30 ist unterhalb der Schiene 22 und des Drehtellers 26 entlang der Bodenfläche ausgelegt, während die zweite Hintergrundfläche 31 im wesentlichen senkrecht zur ersten Hintergrundfläche 30 auf der der Schiene 22 fernen Seite des Drehtellers 26 angeordnet ist. Die Hintergrundflächen 30, 31 sind derart angeordnet, daß sie in den von den Kameras 24 aufgenommenen Bildern den gesamten Hintergrund darstellen.

Da der Drehteller i.a. in der Bildfläche jeder Kamera liegt, ist er ein wichtiger Bestandteil des Hintergrunds und ist daher vorzugsweise zur Vereinheitlichung des Hintergrundes an die Hintergrundfläche angepaßt, indem zumindest die Flächen, Kanten und Ränder des Drehtellers, die in dem Kamerabild erscheinen, mit dem gleichen Material der Hintergrundfläche verkleidet bzw. bedeckt sind.

Außerdem umfaßt die Vorrichtung 20 Beleuchtungskörper 32 zur Ausleuchtung des Objekts 28. Die Beleuchtungskörper 32 sind derart neben den Kameras 24 angeordnet, daß eine blendfreie Ausleuchtung des Objektes 28 möglich ist. Die Beleuchtungskörper 32 sind beispielsweise mittels nicht näher dargestellter flexibler Arme an Seitenflächen der Schiene 22 befestigt, so daß eine individuelle blendfreie Einstellung der Ausleuchtung möglich ist.

Die Hintergrundflächen 30, 31 sind vorteilhafterweise erfindungsgemäß mit im wesentlichen konstantem Farbort im Farbraum ausgebildet. In besonders vorteilhafter Ausgestaltung der Erfindung sind die Hintergrundflächen selbstleuchtend, beispielsweise als elektrolumineszierende Folie, ausgebildet. Um eine besonders gute Konstanz des Farbortes zu erzielen, sind die Hintergrundflächen mit in den Figuren nicht näher dargestellten Filtern bedeckt. Bei einer selbstleuchtenden Ausgestaltung der Hintergrundflächen kann unter Umständen auch auf die zusätzlichen Beleuchtungskörper 32 verzichtet werden.

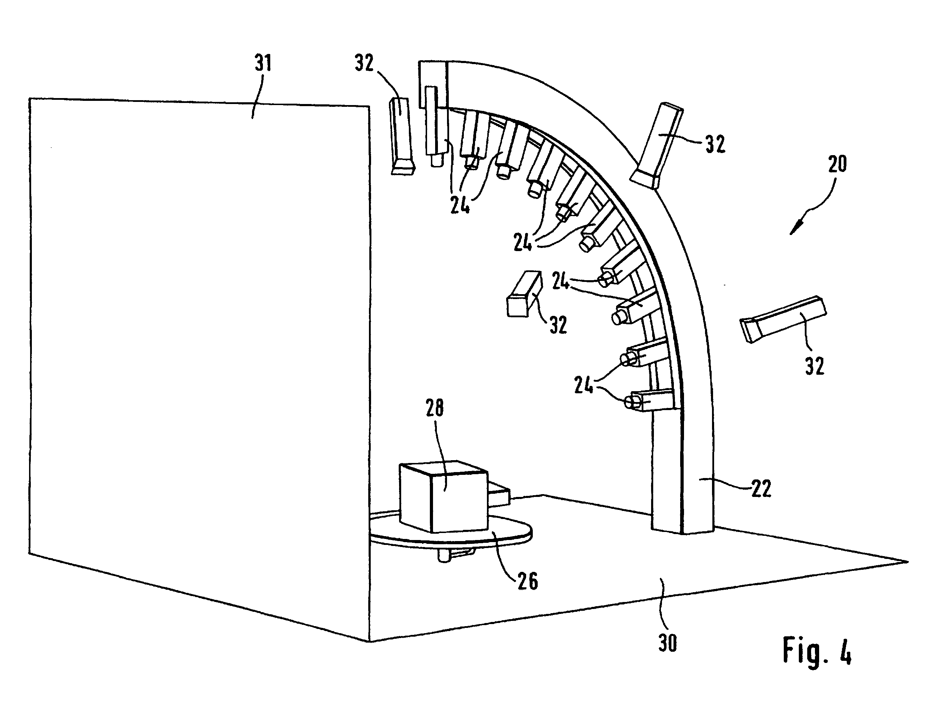

Figur 4 zeigt die erfindungsgemäße Vorrichtung der Figur 3 aus einer anderen perspektivischen Sicht.

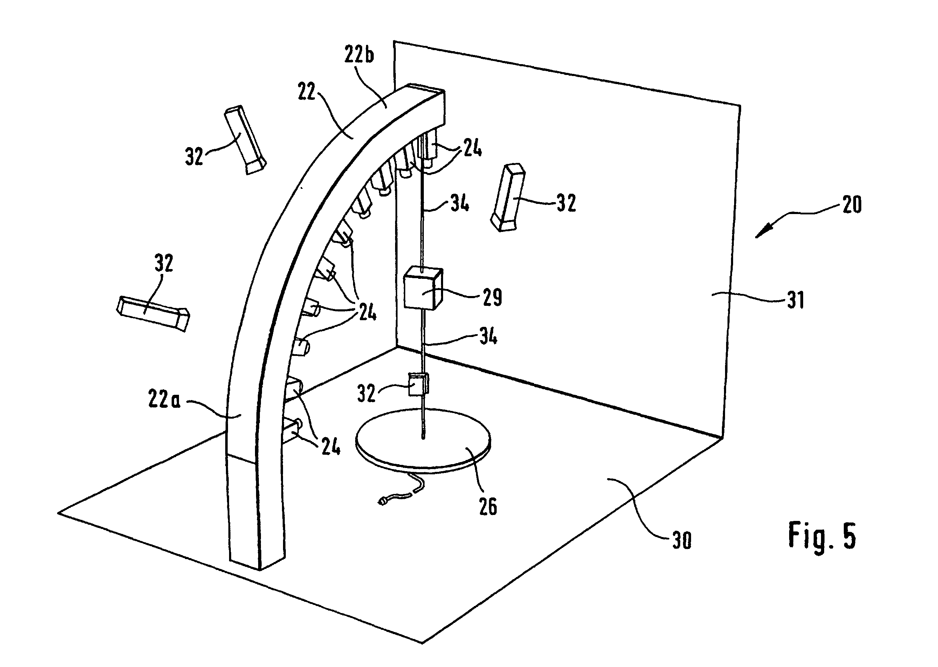

Figur 5 zeigt die erfindungsgemäße Vorrichtung 20 der Figur 3, bei der ein zu erfassendes Objekt 29 mittels einer Hängeeinrichtung 34 aufgehängt ist. Das Aufhängen des zu erfassenden Objekts hat den Vorteil, daß auch die Unterseite des Objekts zumindest teilweise von den im unteren Bereich der Schiene 22 angeordneten Kameras erfaßt und aufgenommen werden kann.

Bei der Hängeeinrichtung 34 handelt es sich insbesondere um eine mit der Drehscheibe 26 verbundene drehfeste Verbindung zwischen Drehteller 26, Objekt 29 und oberen Ende 22b der Schiene 22.

Erfindungsgemäß werden somit zweidimensionale Bilder eines zu erfassenden Objekts aufgenommen und mit den relativen Kamerakoordinaten als Zusatzparameter abgespeichert. Mit Hilfe eines geeigneten Darstellungsprogramms wird in Abhängigkeit von der relativen Position des Betrachters zum Objekt das Bild aufgerufen, das der jeweiligen Ansicht entspricht. So entsteht der Eindruck, als würde das Objekt in einer dreidimensionalen Darstellung betrachtet. Das erfindungsgemäße Verfahren erfordert im Gegensatz zu herkömmlichen 3D-Anwendungen (CAD, Animation) erheblich weniger Rechnerleistung seitens des eingesetzten Computers.

Durch die Verwendung einer selbstleuchtenden Hintergrundsfläche wird der Hintergrund als extrem homogene Fläche mit möglichst konstantem Farbort über die gesamte Fläche dargestellt. Damit wird die Voraussetzung geschaffen, mit Hilfe von sehr schnellen und effizienten Algorithmen ein zu erfassendes Objekt in qualitativ hochwertiger Weise "freizuschneiden". Bei bestehenden Systemen ist aufgrund der Inhomogenität des Hintergrunds in Bezug auf Farb-, Helligkeitsund Kontrastverteilungskonstanz eine Automatisierung der Freischneidens bisher nicht realisiert worden.

Selbstverständlich ist die Erfindung nicht auf die in den Figuren dargestellten und in der Beschreibung beschriebenen Ausführungsbeispiele beschränkt. So ist es beispielsweise möglich, bei der in den Figuren 3 bis 5 dargestellten Ausführungsform eine entlang der Bodenfläche symmetrisch um den Drehteller verlaufende Verstellschiene vorzusehen, auf der die Schiene 22 verstellbar bzw. verschwenkbar angeordnet ist, so daß bei einem großen und entsprechend schweren bzw. unhandlichen Objekt, das nur schwer mittels des Drehtellers 26 drehbar ist, oder bei der Aufnahme von Menschen anstatt einer Drehung des Objekts eine Verschwenkung der Schiene 22 mit sämtlichen Kameras 24 stattfindet und so die Kameras 24 das zu erfassende Objekt von allen Seiten aufnehmen können. Bei einer derartigen Ausgestaltung muß die Hintergrundfläche entweder ebenfalls mit der Schiene 22 gemeinsam verschwenkbar angeordnet sein oder den Aufnahmeraum in sämtliche Richtungen abdecken. In der ersten Variante ist die Hintergrundfläche, insbesondere die der Schiene 22 gegenüberliegende Hintergrundfläche, derart mit der Schiene verbunden, daß sich die Hintergrundfläche gleichförmig mit der Schiene um das Objekt mitbewegt und daß bei einem Stillstand der Schiene (zur Durchführung einer Aufnahme des Objekts) jede Kamerabildfläche voll mit dem Hintergrund der Hintergrundfläche ausgefüllt ist.

## Patentansprüche

1. Vorrichtung zum bildhaften Erfassen dreidimensionaler Objekte, mit einer Mehrzahl von Kameras (12, 13; 24), die in definierter räumlicher Anordnung um ein zu erfassendes Objekt (14; 28, 29) verteilt vorgesehen sind, und einer Speicher- und Wiedergabeeinrichtung, wobei eine Aufnahme des zu erfassenden Objekts (14; 28, 29) aus einer Mehrzahl von Aufnahmerichtungen der Mehrzahl von Kameras (12, 13; 24) relativ zu dem Objekt (14; 28, 29) durch Drehen des Objekts mittels einer Dreheinrichtung (16; 26) erfolgt,
**dadurch gekennzeichnet,**
**daß** eine Speicherung von zweidimensionalen Bilddaten jeder Aufnahmerichtung in der Speichereinrichtung gemeinsam mit zugehörigen Koordinaten der mindestens einen Kamera (12, 13; 24) in bezug auf das zu erfassende Objekt (14; 28, 29) und eine Wiedergabe der gespeicherten Bilddaten in perspektivischer Ansicht zur Erzeugung eines dreidimensionalen Eindrucks durch Aneinanderfügen der zweidimensionalen Bilddaten unter Berücksichtigung der zugehörigen Koordinaten erfolgt.

2. Vorrichtung nach Anspruch 1, bei der die Kameras auf einer das zu erfassende Objekt (14) umgebenden zylindrischen oder teil-sphärischen Fläche angeordnet sind.

3. Vorrichtung nach Anspruch 1, bei dem Mittel (16; 26, 34) zur Änderung der relativen Position der Mehrzahl von Kameras (12, 13; 24) in bezug auf das zu erfassende Objekt (14; 28, 29) und Mittel zum Erfassen der relativen Koordinaten zwischen der mindestens einen Kamera (12, 13; 24) und dem zu erfassenden Objekt (14; 28, 29) vorgesehen sind.

4. Vorrichtung nach Anspruch 3, bei dem die Mehrzahl von Kameras (24) in einer durch das zu erfassende Objekt verlaufenden Ebene um das Objekt (28, 29) verteilt angeordnet sind.

5. Vorrichtung nach Anspruch 4, bei der die Mehrzahl von Kameras (24) entlang einer im wesentlichen C-förmigen oder teilkreisförmigen Schiene (22) angeordnet ist.

6. Vorrichtung nach einem der Ansprüche 1 bis 5, mit mindestens einer auf ein zu erfassendes Objekt (14; 28, 29) richtbaren Kamera (12, 13; 24) zur Aufnahme des zu erfassenden Objekts und mit einer Hintergrundfläche (18; 30, 31) mit im wesentlichen konstantem Farbort im Farbraum.

7. Vorrichtung nach Anspruch 6, mit Beleuchtungsmitteln zum Beleuchten der kamerafernen Rückseite der Hintergrundfläche (18; 30, 31).

8. Vorrichtung nach Anspruch 6, bei der die Hintergrundfläche (18; 30, 31) selbstleuchtend ist.

9. Vorrichtung nach Anspruch 8, bei der die Hintergrundfläche (18; 30, 31) eine elektrolumineszierende Folie ist.

10. Vorrichtung nach Anspruch 8 oder 9, bei der ein die Hintergrundfläche (18; 30, 31) bedeckender flächiger oder folienförmiger Filter vorgesehen ist.

## Claims

1. Apparatus for graphically capturing or recording three-dimensional objects, having a plurality of cameras (12, 13; 24) which are distributed in a defined spatial arrangement about an object (14; 28, 29) which is to be captured, and memory and reproducing means, the object (14; 28, 29) which is to be captured being photographed from a plurality of directions of photography by the plurality of cameras (12, 13; 24) relative to the object (14; 28, 29) by rotating the object using a rotation device (16; 26), **characterised in that** two-dimensional image data from each direction of photography are stored in the memory together with associated coordinates of the minimum of one camera (12, 13; 24) in relation to the object (14; 28, 29) which is to be captured, and the image data stored are reproduced in perspective view to generate a three-dimensional impression by adding the two-dimensional image data to one another while taking account of the associated co-ordinates.

2. Apparatus according to claim 1, wherein the cameras are arranged on a cylindrical or partly spherical surface surrounding the object (14) which is to be captured.

3. Apparatus according to claim 1, wherein means (16; 26, 34) are provided for changing the relative position of the plurality of cameras (12, 13; 24) in relation to the object (14; 28, 29) which is to be captured and means are provided for detecting the relative co-ordinates between the minimum of one camera (12, 13; 24) and the object (14; 28, 29) which is to be captured.

4. Apparatus according to claim 3, wherein the plurality of cameras (24) are distributed around the object (28, 29) in a plane which extends through the object which is to be captured.

5. Apparatus according to claim 4, wherein the plurality of cameras (24) are arranged along a rail (22) which is substantially C-shaped or part of a circle.

6. Apparatus according to one of claims 1 to 5, having at least one camera (12, 13; 24) which can be directed towards an object (14; 28, 29) which is to be captured in order to photograph the object which is to be captured, and having a background surface (18; 30, 31) with a substantially constant colour location within the range of colours.

7. Apparatus according to claim 6, having lighting means for illuminating the rear of the background surface (18; 30, 31) remote from the camera.

8. Apparatus according to claim 6, wherein the background surface (18; 30, 31) is self-illuminating.

9. Apparatus according to claim 8, wherein the background surface (18; 30, 31) is an electroluminescent film.

10. Apparatus according to claim 8 or 9, wherein a flat or film-shaped filter is provided which covers the background surface (18; 30, 31).

## Revendications

1. Dispositif pour la saisie en images d'objets tridimensionnels, comprenant une pluralité de caméras (12, 13; 24) qui sont prévues en répartition autour d'un objet à saisir (14; 28, 29) dans un agencement spatial défini, et un dispositif de mémorisation et de reproduction, une prise de vue de l'objet à saisir (14; 28, 29) étant réalisée depuis une pluralité de dispositifs d'enregistrement de la pluralité de caméras (12, 13; 24) relativement à l'objet (14; 28, 29) par rotation de l'objet à l'aide d'un dispositif de rotation (16; 26), **caractérisé en ce qu'**une mémorisation de données d'image bidimensionnelles de chaque dispositif d'enregistrement est exécutée dans le dispositif de mémorisation, conjointement avec des coordonnées correspondantes de ladite au moins une caméra (12, 13; 24) en référence à l'objet à saisir (14; 28, 29) et une reproduction des données d'image mémorisées est effectuée dans une vue en perspective pour générer une impression tridimensionnelle par assemblage des données d'image bidimensionnelles en tenant compte des coordonnées correspondantes.

2. Dispositif selon la revendication 1, dans lequel les caméras sont agencées sur une surface cylindrique ou partiellement sphérique qui entoure l'objet à saisir (14).

3. Dispositif selon la revendication 1, dans lequel sont prévus des moyens (16; 26, 34) pour modifier la position relative de la pluralité de caméras (12, 13; 24) en référence à l'objet à saisir (14; 28, 29) et des moyens pour saisir les coordonnées relatives entre ladite au moins une caméra (12, 13; 24) et l'objet à saisir (14; 28, 29).

4. Dispositif selon la revendication 3, dans lequel la pluralité de caméras (24) sont agencées en répartition autour de l'objet (28, 29) dans un plan qui s'étend à travers l'objet à saisir.

5. Dispositif selon la revendication 4, dans lequel la pluralité de caméras (24) sont agencées le long d'un rail essentiellement en forme de C ou en forme d'arc de cercle.

6. Dispositif selon l'une des revendications 1 à 5, comprenant au moins une caméra (12, 13; 24) dirigeable vers un objet à saisir (14; 28, 29) pour la prise de vue de l'objet à saisir, et une surface d'arrière-plan (18; 30, 31) avec une localisation chromatique essentiellement constante dans le spectre chromatique.

7. Dispositif selon la revendication 6, comprenant des moyens d'éclairage pour éclairer l'envers de la surface d'arrière-plan (18; 30, 31) qui est éloigné de la caméra.

8. Dispositif selon la revendication 6, dans lequel la surface d'arrière-plan (18; 30, 31) est auto-éclairante.

9. Dispositif selon la revendication 8, dans lequel la surface d'arrière-plan (18; 30, 31) est un film électroluminescent.

10. Dispositif selon l'une ou l'autre des revendications 8 et 9, dans lequel est prévu un filtre surfacique ou en forme de film, qui recouvre la surface d'arrière-plan (18; 30, 31).
